# EUROPÄISCHE PATENTSCHRIFT

(11) **EP 1 400 707 B1**
(45) Veröffentlichungstag und Bekanntmachung des Hinweises auf die Patenterteilung: **28.03.2007**
(21) Anmeldenummer: 03014908.2
(22) Anmeldetag: 01.07.2003
(51) Int. Cl.: F16B 21/09, F16B 21/02, B62D 27/06, F16B 5/00

(54) **Lösbare Verbindung zwischen zwei angrenzenden Bauteilen, insbesondere Aussenhautteilen einer Fahrzeugkarosserie**
Releasable connection between two adjoining components, in particular outer skin parts of a vehicle body
Raccordement démontable entre deux composants adjacents, en particulier panneaux externes d'un corps de véhicule

(30) Priorität: 14.09.2002 DE 10242787
(43) Veröffentlichungstag der Anmeldung: 24.03.2004
(73) Patentinhaber: Dr.Ing. h.c.F. Porsche Aktiengesellschaft, 70435 Stuttgart (DE)
(72) Erfinder: Danev, Dimitar, 71272 Renningen (DE)

(56) Entgegenhaltungen:
- CH-A- 444 414
- DE-A- 19 912 267

## Beschreibung

Die Erfindung betrifft eine lösbare Verbindung zwischen zwei angrenzenden Bauteilen, insbesondere Außenhautteilen einer Fahrzeugkarosserie.

Es ist im Fahrzeugbau allgemein bekannt, angrenzende Bauteile, insbesondere Außenhautteile einer Fahrzeugkarosserie durch Schweißen miteinander zu verbinden.

Ferner ist es aus der DE-PS 1 277 042 bekannt, angrenzende Außenhautteile einer Fahrzeugkarosserie lösbar miteinander zu verbinden. Hierzu ist an einem Bauteil eine mit einem Innengewinde versehene Schweißmutter vorgesehen, in die eine mit dem anderen Bauteil verbundene Schraube eindrehbar ist. Um ein Verdrehen beider Bauteile gegeneinander beim Befestigen zu verhindern, müssen mehrere mit Abstand zueinander angeordnete Schraubbefestigungen vorgesehen werden.

Dieser Anordnung haftet der Nachteil an, daß mehrere nebeneinanderliegende Schraubbefestigungen vorgesehen werden müssen, wofür ein erheblicher Zeitaufwand erforderlich ist.

Die CH-A-444 414 zeigt eine lösbare Verbindung zwischen zwei rechtwinkelig zueinander ausgerichteten Bauteilen, wobei die lösbare Verbindung zumindest eine an der Oberseite des einen Bauteils befestigte profilierte Leiste mit wenigstens einem in die Leiste eingedrehten Gewindebolzen und eine in einer nischenartigen Ausnehmung des zweiten Bauteils eingesetzte Aufnahme mit einem verdrehbaren geschlitzten Hülsenteil umfasst. Ein Kopfabschnitt des Gewindebolzens ist durch einen zylindrischen Durchbruch der Aufnahme und eine Öffnung des Hülsenteiles hindurchführbar, wobei durch radiales Verdrehen des Hülsenteils um einen Winkel α eine Festlegung beider Bauteile zueinander erfolgt.

Für die lösbare Verbindung zwischen zwei angrenzenden Bauteilen, insbesondere Außenhautteilen einer Fahrzeugkarosserie, die entlang einer Fuge aneinandergesetzt sind und im gemeinsamen Verbindungsbereich mit nach innen abgestellten gleichgerichteten Flanschen versehen sind, ist das Verbindungskonzept gemäß der CH-A 444 414 jedoch nicht geeignet, da die karosserieseitigen Flanschen nur eine sehr geringe Wanddicke aufweisen und somit eine innen liegende Aufnahme nicht in sich aufnehmen können.

Aufgabe der Erfindung ist es, eine lösbare Verbindung zwischen zwei angrenzenden Bauteilen, insbesondere Außenhautteilen einer Fahrzeugkarosserie so weiterzubilden, daß einerseits eine exakte Positionierung beider Teile zueinander mit einer gleichbleibenden Fuge erzielt wird und daß andererseits eine schnelle und einfache Montage beider Bauteile gewährleistet ist.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die erfindungsgemäße lösbare Verbindung der Montageaufwand, insbesondere die Montagezeit deutlich verringert wird. Die aus einer Grundplatte mit angeformten Zapfen, einer Aufnahme und einem verdrehbaren Hülsenteil bestehende lösbare Verbindung läßt sich schnell und einfach montieren und demontieren. Die paarweise an der Grundplatte vorgesehenen vorstehenden Zapfen gewährleisten eine Verdrehsicherung und sorgen zudem für eine exakte Positionierung beider Bauteile sowie für ein optisch ansprechendes Fugenbild. Durch die exzentrische Ausbildung des Hülsenteiles lassen sich die Bauteile mit einer gewünschten Vorspannung montieren. Die Einzelteile der lösbaren Verbindung lassen sich einfach und kostengünstig herstellen. Zudem lassen sich die Teile einfach an beiden zu verbindenden Bauteilen durch Klipsverbindungen vormontieren.

In der Zeichnung wird ein Ausführungsbeispiel der Erfindung näher erläutert. Es zeigt
- Fig. 1: eine Teildraufsicht von schräg vorne auf angrenzende Außenhautteile eines Personenkraftwagens,
- Fig. 2: einen Schnitt nach der Linie II-II der Fig. 1 in größerer Darstellung und gedreht,
- Fig. 3: die lösbare Verbindung in perspektivischer Darstellung und montierter Stellung,
- Fig. 4: die Einzelteile der lösbaren Verbindung in Explosionsdarstellung,
- Fig. 5: die Grundplatte mit den angeformten Zapfen in perspektivischer Darstellung,
- Fig. 6: einen Schnitt nach der Linie Vl-Vl der Fig. 2 um 90° gedreht.

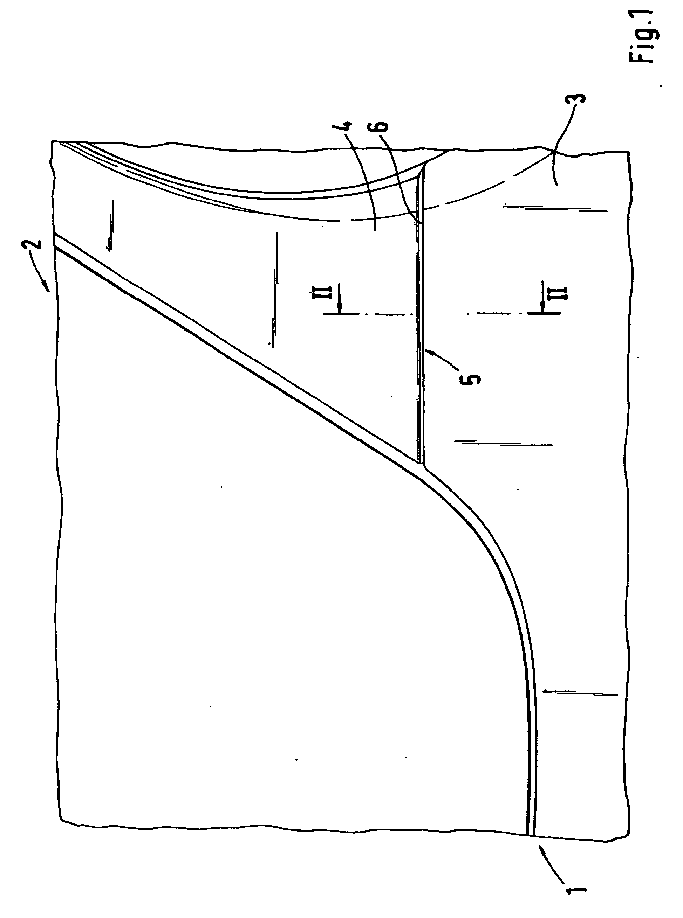

In Fig. 1 ist der bugseitige Endbereich 1 eines Personenkraftwagens 2 dargestellt, wobei angrenzende Bauteile 3, 4 der Fahrzeugkarosserie über zumindest eine lösbare Verbindung 5 miteinander verbunden sind. Die angrenzenden Bauteile 3, 4 sind entlang einer Fuge 6 aneinander gesetzt und werden durch Außenhautteile des Personenkraftwagens 2 gebildet. Im Ausführungsbeispiel wird das erste Bauteil 3 durch eine Bugverkleidung gebildet, wogegen das zweite Bauteil 4 einen feststehenden vorderen Kotflügel darstellt.

Im gemeinsamen Verbindungsbereich 7 sind beide Bauteile 3, 4 mit abgestellten, nach innen gerichteten Flanschen 8, 9 versehen, die bereichsweise aneinander anliegen. Der Flansch 8 ist dabei dem Bauteil 3 und der Flansch 9 dem Bauteil 4 zugeordnet.

Die lösbare Verbindung 5 umfaßt zumindest eine an einem Bauteil 3 in Lage gehaltene Grundplatte 10 mit wenigstens einem vorstehenden Zapfen 11, 11a und eine am anderen Bauteil 4 befestigte Aufnahme 12 mit einem innenliegenden örtlich geschlitzten Hülsenteil 13. Ein endseitiger profilierter Kopfabschnitt 14, 14a des Zapfens 11, 11a ist durch Öffnungen 15, 16, 17 des Bauteils 4, der Aufnahme 12 und des Hülsenteiles 13 hindurchführbar. Durch radiales Verdrehen des Hülsenteiles 13 um einen Winkel α, welches dabei einen kreisbogenförmigen Bereich 18 des Kopfabschnitts 14 bereichsweise hintergreift, erfolgt eine Festlegung der Teile 10, 12 der lösbaren Verbindung und somit werden die Bauteile 3, 4 gegeneinander gespannt.

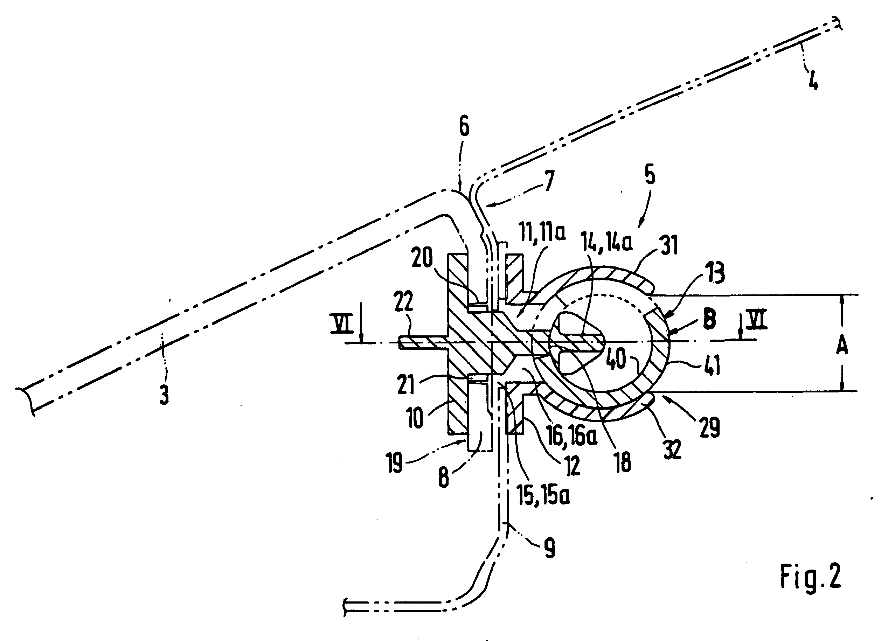

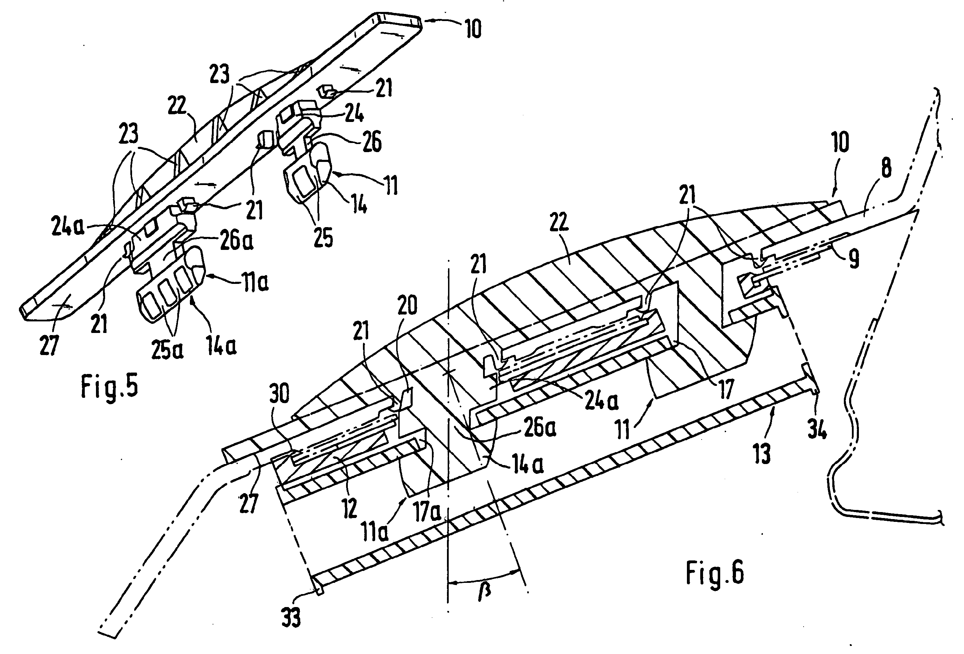

Die in der Draufsicht gesehen langgestreckte viereckige Grundplatte 10 ist im Ausführungsbeispiel am Bauteil 3 vormontiert. Dies kann durch Klipsen, Kleben oder dergleichen erfolgen Erfindungsgemäß (s. zum Beispiel Fig. 2) wird die Grundplatte 10 von der dem Bauteil 4 abgewandeten Seite 19 des Flansches 8 an das Bauteile 3 herangeführt und stützt sich am Flansch 8 ab. Am Flansch 8 sind zum Festlegen der Grundplatte 10 sowie zum Hindurchführen des zumindest einen Zapfens 11, 11a rechteckförmige Öffnungen 20 vorgesehen. Im Ausführungsbeispiel ist die Grundplatte 10 mit dem Bauteil 3 durch Klipsen verbunden. Örtlich an der Grundplatte 10 ausgebildete Rastnasen 21 hintergreifen dabei Randabschnitte der Öffnungen 20 des Bauteils 3. Gemäß Fig. 5 sind an der Grundplatte 10 zwei jeweils paarweise angeordnete Rastnasen 21 vorgesehen, die verrastend mit dem Bauteil 3 zusammenwirken. Die Rastnasen 21 erstrecken sich beiderseits der angespritzten Zapfen 11, 11a (Fig. 5). Auf der den Zapfen 11, 11a abgekehrten Seite weist die Grundplatte 10 eine längsverlaufende gebogene Abstützrippe 22 sowie mehrere querverlaufende Abstützrippen 23 auf. Jeder angeformte Zapfen 11, 11a setzt sich aus einem Fußabschnitt 24, 24a einen mit Versteifungsrippen 25, 25a versehenen Kopfabschnitt 14, 14a und einem dazwischenliegenden Stegbereich 26, 26a zusammen. Die etwa rechtwinkelig an die Grundplatte 10 angeschlossenen Zapfen 11, 11a verlaufen in der Draufsicht gesehen unter einem Winkel β zur Anlagefläche 27 der Grundplatte 10 (s. Fig. 6). Die beiden Zapfen 11, 11a sind mit Abstand zueinander an der länglichen Grundplatte 10 ausgebildet. Es könnten jedoch auch zwei getrennte Grundplatten mit jeweils einem vorstehenden Zapfen 11 verwendet werden.

Die Aufnahme 12 ist vorzugsweise am Bauteil 4 vormontiert und umfaßt erfindungsgemäß einen etwa plattenförmigen rechteckigen Steg 28 sowie zwei mit Abstand zueinander angeordnete, mit dem Steg 28 verbundene Aufnahmeabschnitte 29. Innerhalb der Aufnahmeabschnitte 29 ist das langgestreckte örtlich geschlitzte Hülsenteil 13 aufgenommen. Am plattenförmigen Steg 28 sind im Bereich der hindurchzuführenden Zapfen 11, 11a korrespondierende Öffnungen 16, 16a vorgesehen, die etwa der Außenform der Fußabschnitte 24, 24a der Zapfen 11, 11a angepaßt sind. Der Steg 28 weist im Querschnitt gesehen einen leicht gebogenen Formverlauf auf, so daß er nur an den Randbereichen am angrenzenden Bauteil 4 anliegt. Die Aufnahme 12 ist ebenfalls durch Klipsen mit dem angrenzenden Bauteil 4 verbunden. Hierzu sind am plattenförmigen Steg 28 örtlich Rastnasen 30 angespritzt, die Randabschnitte von am Flansch 9 vorgesehenen Öffnungen 15 verrastend hintergreifen.

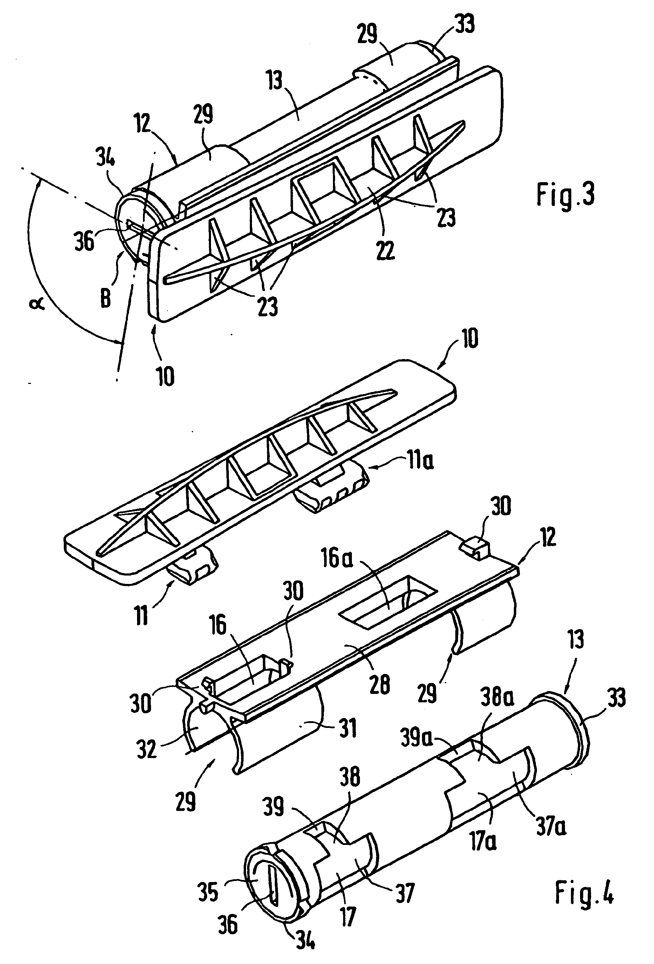

Jeder Aufnahmeabschnitt 29 wird durch zwei übereinanderliegend angeordnete kreisbogenförmige Haltelippen 31, 32 gebildet, wobei die freien Enden der Haltelippen 31, 32 mit Abstand A zueinander verlaufen. Der Abstand A ist so gewählt, daß ein seitliches Einsetzen des Hülsenteiles 13 in Pfeilrichtung R in die Aufnahmeabschnitte 29 gewährleistet ist. Die Aufnahmeabschnitte 29 sind an beiden längsverlaufenden Enden der Aufnahme 12 angeordnet. Der eine endseitige Aufnahmeabschnitt 29 fluchtet mit einer Öffnung 16 zum Hindurchführen des Zapfens 11, wogegen der andere Aufnahmeabschnitt 29 seitlich versetzt zur Öffnung 16 a des anderen Zapfens 11a angeordnet ist (Fig. 4).

Das langgestreckte Hülsenteil 13 wird durch einen Hohlzylinder gebildet, der an beiden stirnseitigen Enden jeweils einen radial vorstehenden Kragenabschnitt 33, 34 aufweist. Beide Kragenabschnitte 33, 34 fixieren das drehbare Hülsenteil 13 in Längsrichtung und stützen sich jeweils an den Außenseiten der Aufnahmeabschnitte 29 ab.

Ein stirnseitiges Ende des Hülsenteiles 13 ist durch eine Wand 35 geschlossen und weist mittig einen schmalen Längsschlitz 36 zum Einführen eines Hilfswerkzeuges auf, um das Hülsenteil 13 in gewünschter Weise zu verdrehen. Im Ausführungsbeispiel wird bei der Montage das Hülsenteil 13 mittels eines Schraubenziehers um einen Winkel α von etwa 90° verdreht. Die Öffnungen 17, 17a am Hülsenteil 13 sind jeweils als sogenannte Schlüssellochöffnungen ausgebildet. Jede Schlüssellochöffnung umfaßt einen relativ großen Einführabschnitt 37, 37a, durch den jeweils ein Kopfabschnitt 14, 14a des zugeordneten Zapfens 11, 11a in das Innere des Hülsenteiles 13 einführbar ist. An ein Ende des Einführabschnitts 37, 37a schließt sich ein wesentlich kleinerer Halteabschnitt 38, 38a an, der in der Breite gesehen geringfügig größer ist als die Breite des Stegbereiches 26, 26a des entsprechenden Zapfens 11, 11a. Die beiden Zapfen 11, 11a können in Längsrichtung des Hülsenteiles 13 gesehen gleich oder unterschiedlich breit ausgebildet sein. Im gezeigten Ausführungsbeispiel weisen die Zapfen 11, 11a eine unterschiedliche Breite auf. Die äußere Begrenzung 39, 39a des Halteabschnitts 38, 38a definiert die montierte Endstellung B des Hülsenteiles 13 nach dem Verdrehen. Der Längsschlitz 36 verläuft dann etwa parallel zur Ebene der Abstützrippe 22. Die Bauteile der lösbaren Verbindung 5 sind aus einem geeigneten Kunststoff oder aus Metall hergestellt.

Eine definierte Vorspannung der lösbaren Verbindung 5 wird dadurch erzielt, daß die Innenwandung 40 des Hülsenteiles 13 exzentrisch zur Außenwandung 41 verläuft. Dadurch weist das Hülsenteil 13 quasi eine Nockenform auf, die eine definiertes Verspannen beider Bauteile 3, 4 gegeneinander beim Verdrehen des Hülsenteiles 13 der lösbaren Verbindung 5 bewirkt (nicht näher dargestellt).

Die Montage der lösbaren Verbindung 5 erfolgt folgendermaßen: Die Grundplatte 10 mit den angeformten Zapfen 11, 11a ist am Bauteil 3 vormontiert. Am Bauteil 4 ist die Aufnahme 12 mit dem Hülsenteil 13 vormontiert. Das Hülsenteil 13 nimmt eine solche Lage ein, daß die Einführabschnitte 37, 37a in Richtung der hindurchzuführenden Zapfen 11, 11a des Bauteiles 3 fluchten. Danach wird das Hülsenteil 13 im Uhrzeigersinn um etwa 90° verdreht, so daß das Hülsenteil 13 kreisbogenförmige Anlageabschnitte 18 der Kopfabschnitte 14, 14a der Zapfen 11, 11a hintergreift (Montagestellung B gem. fig. 3).

## Patentansprüche

1. Lösbare Verbindung zwischen zwei angrenzenden Bauteilen, insbesondere Außenhautteilen einer Fahrzeugkarosserie, die entlang einer Fuge aneinander gesetzt sind, wobei im gemeinsamen Verbindungsbereich beide Bauteile mit nach innen abgestellten gleichgerichteten Flanschen versehen sind, **dadurch gekennzeichnet,**
- **daß** die Flansche (8, 9) beider Bauteile (3, 4) im gemeinsamen Verbindungsbereich (7) bereichsweise aneinander anliegen,
- **dass** die lösbare Verbindung (5) zumindest eine an einem Bauteil (3) in Lage gehaltene Grundplatte (10) mit wenigstens einem vorstehenden Zapfen (11, 11a) und eine am gegenüberliegenden Bauteil (4) befestigte Aufnahme (12) mit einem verdrehbaren geschlitzten Hülsenteil (13) umfaßt,
- **dass** die Grundplatte von der dem Bauteil (4) abgewandten Seite (19) des Flansches (8) an das Bauteil (4) herangeführt ist und sich an diesem abstützt,
- **dass** die Aufnahme (12) einen etwa plattenförmigen Steg (28) sowie zwei mit Abstand zueinander angeordnete, mit dem Steg (28) verbundene Aufnahmeabschnitte (29) umfasst, wobei innerhalb der Aufnahmeabschnitte (29) das langgestreckte Hülsenteil (13) aufgenommen ist,
- **dass** ein endseitiger profilierter Kopfabschnitt (14, 14a) des zumindest einen Zapfens (11, 11a) durch Öffnungen (15, 16, 17) des ersten Bauteils (3), des zweiten Bauteils (4), der Aufnahme (12) und des Hülsenteiles (13) hindurchführbar ist,
- **dass** durch radiales Verdrehen des Hülsenteiles (13) um einen Winkel α, welches einen kreisbogenförmigen Bereich (18) des Kopfabschnitts (14) bereichsweise hintergreift, eine Festlegung beider Bauteile (3, 4) zueinander erfolgt.

2. Lösbare Verbindung nach Anspruch 1, **dadurch gekennzeichnet, daß** die lösbare Verbindung (5) zumindest zwei mit Abstand zueinander angeordnete vorstehende Zapfen (11, 11a) umfaßt, die an einer gemeinsamen Grundplatte (10) oder an zwei getrennten Grundplatten (10) angeordnet sind.

3. Lösbare Verbindung nach den Ansprüchen 1 und 2, **dadurch gekennzeichnet, dass** jede Grundplatte (10) über eine Klipsverbindung am ersten Bauteil (3) in Lage gehalten ist.

4. Lösbare Verbindung nach einem der vorhergehenden Ansprüche, **dadurch gekennzeichnet, dass** am plattenförmigen Steg (28) im Bereich der hindurchzuführenden Zapfen (11, 11a) korrespondierende Öffnungen (16, 16a) vorgesehen sind.

5. Lösbare Verbindung nach einem der vorhergehenden Ansprüche, **dadurch gekennzeichnet, dass** der plattenförmige Steg (28) der Aufnahme (12) durch Klipsverbindungen mit dem zweiten Bauteil (4) verbunden ist.

6. Lösbare Verbindung nach einem der vorhergehenden Ansprüche, **dadurch gekennzeichnet, dass** jeder Aufnahmeabschnitt (29) zwei übereinanderliegend angeordnete kreisbogenförmige Haltelippen (31, 32) aufweist, wobei die freien Enden beider Haltelippen (31, 32) in Höhenrichtung so weit voneinander entfernt sind, dass ein seitliches Einsetzen des Hülsenteiles (13) gewährleistet ist.

7. Lösbare Verbindung nach einem der vorhergehenden Ansprüche, **dadurch gekennzeichnet, dass** das Hülsenteil (13) an seinen beiden Enden radial vorstehende Kragenabschnitte (33, 34) aufweist, die das Hülsenteil (13) in axialer Richtung an der Aufnahme (12) fixieren.

8. Lösbare Verbindung nach einem der vorhergehenden Ansprüche, **dadurch gekennzeichnet, daß** zumindest ein stirnseitiges Ende des Hülsenteils (13) durch eine Wand (35) geschlossen ist und dass an der Wand (35) ein schmaler Längsschlitz (36) zum Einführen eines Hilfswerkzeuges vorgesehen ist, um das Hülsenteil (13) zu verdrehen.

9. Lösbare Verbindung nach einem der vorhergehenden Ansprüche, **dadurch gekennzeichnet, dass** zur Erzielung einer definierten Vorspannung der lösbaren Verbindung (5) das Hülsenteil (13) exzentrisch ausgebildet ist.

## Claims

1. A releasable connection between two adjacent components, especially outer skin parts of a vehicle body, which are placed together along a joint, wherein the two components are provided with inwardly bent, uniformly orientated flanges in the common connecting region, **characterised in that**
- the flanges (8, 9) of the two components (3, 4) partly lie against one another in the common connecting region (7),
- **in that** the releasable connection (5) comprises at least one base plate (10) which is held in position on one component (3) and has at least one projecting pin (11, 11a), and a receiver (12) which is fastened to the opposite component (4) and has a rotatable slotted sleeve part (13),
- **in that** the base plate extends towards the component (4) from the side (19) of the flange (8) remote from the component (4) and is supported on said flange (8),
- **in that** the receiver (12) comprises an approximately plate-shaped crosspiece (28) and two receiving portions (29) which are arranged spaced apart and are connected to the crosspiece (28), wherein the elongate sleeve part (13) is held inside the receiving portions (29),
- **in that** an end profiled head portion (14, 14a) of the at least one pin (11, 11a) is insertable through openings (15, 16, 17) in the first component (3), the second component (4), the receiver (12) and the sleeve part (13),
- **in that** the two components (3, 4) are secured in relation to one another by radial rotation of the sleeve part (13) through an angle α, which sleeve part (13) partly engages behind an arc-shaped region (18) of the head portion (14).

2. A releasable connection according to claim 1, **characterised in that** the releasable connection (5) comprises at least two projecting pins (11, 11a) which are arranged spaced apart and are arranged on a common base plate (10) or on two separate base plates (10).

3. A releasable connection according to claims 1 and 2, **characterised in that** each base plate (10) is held in position on the first component (3) by a clip-type connection.

4. A releasable connection according to any one of the preceding claims, **characterised in that**, in the region of the pins (11, 11a) to be inserted, corresponding openings (16, 16a) are provided in the plate-shaped crosspiece (28).

5. A releasable connection according to any one of the preceding claims, **characterised in that** the plate-shaped crosspiece (28) of the receiver (12) is connected to the second component (4) by clip-type connections.

6. A releasable connection according to any one of the preceding claims, **characterised in that** each receiving portion (29) has two arc-shaped holding lips (31, 32) arranged so as to lie one above the other, wherein the free ends of the two holding lips (31, 32) are arranged sufficiently far apart in the vertical direction to ensure lateral insertion of the sleeve part (13).

7. A releasable connection according to any one of the preceding claims, **characterised in that** the sleeve part (13) has, at its two ends, radially projecting collar portions (33, 34) which fix the sleeve part (13) to the receiver (12) in the axial direction.

8. A releasable connection according to any one of the preceding claims, **characterised in that** at least one front end of the sleeve part (13) is closed by a wall (35) and **in that** the wall (35) is provided with a narrow longitudinal slot (36) for insertion of an auxiliary tool for rotation of the sleeve part (13).

9. A releasable connection according to any one of the preceding claims, **characterised in that**, in order to achieve defined pretensioning of the releasable connection (5), the sleeve part (13) is eccentrically formed.

## Revendications

1. Assemblage amovible entre deux pièces adjacentes, en particulier des pièces de carrosserie d'une caisse de véhicule, qui sont aboutées l'une contre l'autre le long d'un joint de séparation, les deux pièces étant munies, dans la zone d'assemblage commune, de brides spécialement adaptées, orientées dans le même sens vers l'intérieur, **caractérisé**
- **en ce que** les brides (8, 9) des deux pièces (3, 4) sont en appui par zones l'une contre l'autre dans la zone d'assemblage (7) commune,
- **en ce que** l'assemblage amovible (5) comporte au moins une plaque de base (10), maintenue en position contre l'une des pièces (3) et comportant au moins un téton (11, 11a) en saillie, et un élément de réception (12), fixé contre la pièce (4) en face et muni d'un manchon (13) fendu apte à tourner,
- **en ce que** la plaque de base (10) est amenée contre la pièce (3) depuis le côté (19), détourné de la pièce (4), sur la bride (8) et prend appui contre cette dernière,
- **en ce que** l'élément de réception (12) comporte une traverse (28) sensiblement en forme de platine, ainsi que deux segments de réception (29) assemblés à la traverse (28) et situés à distance l'un de l'autre, le manchon (13) allongé étant logé à l'intérieur des segments de réception (29),
- **en ce qu'**une tête (14, 14a), profilée du côté extrémité, sur ledit au moins un téton (11, 11a) est apte à être guidée à travers des orifices (15, 16, 17) de la première pièce (3), de la deuxième pièce (4), de l'élément de réception (12) et du manchon (13),
- **en ce qu'**une rotation radiale du manchon (13) selon un angle α, lequel enserre par zones par l'arrière une zone (18) en arc de cercle de la tête (14), engendre une fixation des deux pièces (3, 4) l'une contre l'autre.

2. Assemblage amovible selon la revendication 1, **caractérisé en ce que** l'assemblage amovible (5) comporte au moins deux tétons (11, 11a) en saillie, qui sont agencés à distance l'un de l'autre et qui sont disposés contre une plaque de base (10) commune ou contre deux plaques de base (10) séparées.

3. Assemblage amovible selon les revendications 1 et 2, **caractérisé en ce que** chaque plaque de base (10) est maintenue en position contre la première pièce (3) par l'intermédiaire d'un assemblage par encliquetage.

4. Assemblage amovible selon l'une quelconque des revendications précédentes, **caractérisé en ce que** sur la traverse (28) en forme de platine, dans la zone des tétons (11, 11a) destinés à passer à travers celle-ci, sont prévus des orifices (16, 16a) correspondants.

5. Assemblage amovible selon l'une quelconque des revendications précédentes, **caractérisé en ce que** la traverse (28) en forme de platine de l'élément de réception (12) est assemblée à la deuxième pièce (4) par l'intermédiaire d'assemblages par encliquetage.

6. Assemblage amovible selon l'une quelconque des revendications précédentes, **caractérisé en ce que** chaque segment de réception (29) comporte deux lèvres de fixation (31, 32) en forme d'arc de cercle superposées, les extrémités libres des deux lèvres de fixation (31, 32) étant écartées l'une de l'autre dans le sens vertical à une distance telle qu'une introduction latérale du manchon (13) est garantie.

7. Assemblage amovible selon l'une quelconque des revendications précédentes, **caractérisé en ce que** le manchon (13) comporte sur ses deux extrémités frontales des collerettes (33, 34), qui sont en saillie dans le sens radial et par lesquelles le manchon (13) est fixé dans la direction axiale contre l'élément de réception (12).

8. Assemblage amovible selon l'une quelconque des revendications précédentes, **caractérisé en ce qu'**au moins une extrémité frontale du manchon (13) est fermée par une paroi (35) et **en ce qu'**une étroite fente longitudinale (36) est prévue contre la paroi (35) pour l'introduction d'un outil auxiliaire en vue de faire tourner le manchon (13).

9. Assemblage amovible selon l'une quelconque des revendications précédentes, **caractérisé en ce que** le manchon (13) est réalisé de manière excentrée pour obtenir une précontrainte définie de l'assemblage amovible (5).
